# EUROPÄISCHE PATENTSCHRIFT

(11) **EP 1 697 736 B1**
(45) Veröffentlichungstag und Bekanntmachung des Hinweises auf die Patenterteilung: **07.01.2009**
(21) Anmeldenummer: 04797246.8
(22) Anmeldetag: 15.11.2004
(51) Int. Cl.: G01N 30/18

(54) **VORRICHTUNG ZUR PROBENVORBEREITUNG**
DEVICE FOR SAMPLE PREPARATION
DISPOSITIF POUR PREPARER UN ECHANTILLON

(30) Priorität: 09.12.2003 CH 20952003
(43) Veröffentlichungstag der Anmeldung: 06.09.2006
(73) Patentinhaber: BGB Analytik AG, 4461 Böckten BL (CH)
(72) Erfinder: SCHILLING, Beat, CH-8038 Zürich (CH); FISCHER, Bernhard, CH-4469 Anwil (CH); HOTTINGER, Georg, CH-8810 Horgen (CH); MEIER, Markus, CH-4493 Wenslingen (CH)
(74) Vertreter: Braun, André jr.
(86) Internationale Anmeldenummer: PCT/CH2004/000689
(87) Internationale Veröffentlichungsnummer: WO 2005/057206

(56) Entgegenhaltungen:
- WO-A-20/05042166
- CH-A- 656 957
- US-A- 5 123 276
- US-A1- 2001 032 521
- PETERS T L: "A SYRINGE MOUNTABLE MICRO ADSORBENT COLUMN FOR THE CONCENTRATION OFORGANICS" RESEARCH DISCLOSURE, KENNETH MASON PUBLICATIONS, HAMPSHIRE, GB, Nr. 399, 1. Juli 1997 (1997-07-01), Seite 453, XP000726581 ISSN: 0374-4353

## Beschreibung

Die Erfindung betrifft ein Verfahren zur Vorbereitung einer Probe, insbesondere zur Extraktion und Anreicherung einer flüchtigen Komponente aus einer flüssigen, festen oder gasförmigen Probe um anschliessend einem Analysengerät, z.B. einem Gaschromatographen zugeführt zu werden. Eine Vorrichtung zur Durchführung dieses Verfahrens umfasst eine Spritze und eine mit dem Spritzenkörper verbundene Hohlnadel.

Um interessierende Komponenten einer Probe, beispielsweise flüchtige Verunreinigungen einer Umweltprobe, in einem Gaschromatographen zu analysieren, muss die Probe derart vorbereitet werden, dass die interessierenden Komponenten aus der Probe extrahiert und angereichert werden. Aus DE 19525771 ist eine Feststoff-Phasen-Extraktion bekannt, welche für die Uebertragung der interessierenden Komponenten in einen Chromatographen eine Spritze verwendet, deren Nadel mit einer Beschichtung aus einer stationären Phase versehen ist. Beim, ggf. mehrfachen, Ansaugen einer Probe in die Nadel findet eine Extraktion von interessierenden Komponenten statt. Anschliessend werden die durch Desorption von der stationären Phase abgelösten Komponenten in den Injektionseinlass eines Gaschromatographen eingebracht. Die Spritze kann manuell oder automatisch betrieben werden.

Eine ähnliche Vorrichtung mit einer Spritze, deren Nadel mit einer stationären Phase beschichtet ist, ist aus WO99/31480 bekannt. Bei dieser Vorrichtung ist zusätzlich ein Zuführungssystem für ein gegenüber dem Analyten inertes Trägergas vorgesehen, mittels welchem die Interessierenden Komponenten desorbiert und einem Gaschromatographen zugeführt werden. DE10024443 beschreibt ebenfalls eine Vorrichtung mit einer Spritze, deren Nadel eine Beschichtung aus einer stationären Phase aufweist, an welcher der interessierende Analyt adsorbiert und anschliessend durch Desorption in einen Gaschromatographen eingebracht wird. Zu diesem Zweck wird die Nadel während der Desorptionsphase von einem Trägerfluid durchspült.

Die internationale Patentanmeldung WO2005/042166 A wurde am 12. Mai 2005 veröffentlicht und gehört nach Artikel 54(3) EPÜ zum Stand der Technik. Aus dieser Schrift ist eine Probenpipette bekannt, bestehend aus einer Spritze mit einer Hohlnadel, sowie ein Ansatzteil mit einem erweiterten Durchmesser für ein funktionelles Element. Dieses Funktionelle Element ist in einer Ausführungsform eine Packung mit einer aktiven Phase zur adsorption von Bestandteilen einer Probe. Flüchtige Bestandteile werden nicht erwähnt.

Diese bekannten Systeme haben den Nachteil, dass durch die begrenzte Oberfläche (wenige mm²) des Extraktionsmaterials die Extraktion, d.h. die Aufnahme der interessierenden Komponenten nur langsam und unvollständig ist. Dadurch ist die Effizienz dieser bekannten Systeme nicht optimal. Der Erfindung liegt daher die Aufgabe zugrunde, diesen Nachteil zu beheben.

Erfindungsgemäss wird dies erreicht durch ein Verfahren nach Anspruch 1, and eine Vorrichtung nach Anspruch 2.

Gemäss einer bevorzugten Ausführungsform der Erfindung besteht das Extraktionsmaterial aus mit stationärer Phase beschichteten Körnchen oder Kügelchen (z.B. Chromosorb beschichtet mit Carbowax 20M). Gemäss einer anderen bevorzugten Ausführungsform besteht das Extraktionsmaterial aus Absorptionsmaterialien, wie sie in der Chromatographie ver-wendet werden (z.B. Carbosieve S3, Carbopack, Tenax, Aktivkohle etc.)

Im folgenden werden anhand der beiliegenden Zeichnungen bevorzugte Ausführungsbeispiele der Erfindung beschrieben. Es zeigen
- Fig. 1: einen Schnitt durch eine Ausführungsform der erfindungsgemässen Vorrichtung
- Fig. 2-5: schematische Darstellungen verschiedener Verfahrensabläufe

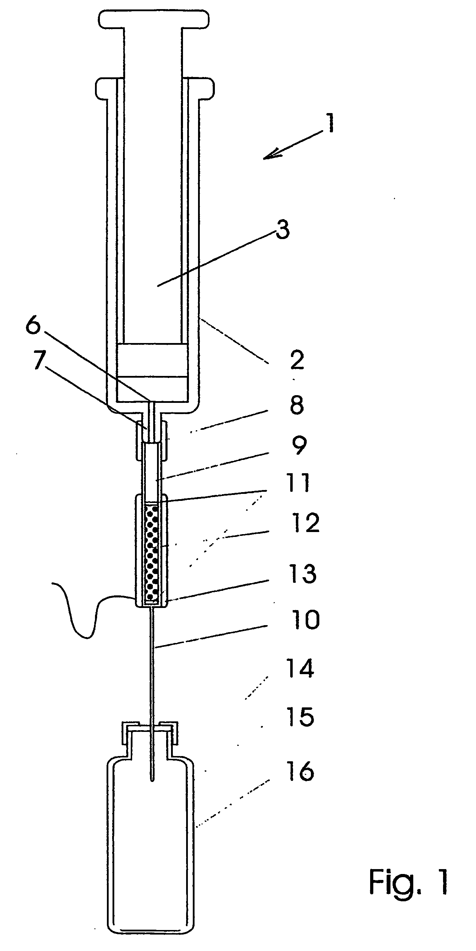

Wie in Fig. 1 gezeigt, besteht eine gasdichte Spritze 1 aus einem Spritzenkörper 2 und einem in diesem axial bewegbaren Stempel 3. An seinem unteren Ende besitzt der Spritzenkörper wie üblich eine Ausgangsöffnung 6 mit einem Anschlussstutzen 7, der beispielsweise als Luer-Anschluss ausgebildet ist. Mittels eines Verbindungsstücks 8 ist mit dem Anschluss 7 ein Extraktionsrohr 9 verbunden. Am unteren Ende des Extraktionsrohrs ist die Hohlnadel 10 angeordnet, die bei üblichen Spritzen auf den Luer-Anschluss 7 aufgesteckt wäre.

Alternativ ist es möglich das Extraktionsrohr und die Hohlnadel einstückig herzustellen.

Das Extraktionsrohr 9 hat einen Durchmesser zwischen 0.5 und 4 mm und eine Länge von 2 bis 60 mm. In seinem Inneren befindet sich zwischen zwei Fritten 11 eine Packung 12. Die Fritten bestehen aus gesinterte Metallkörnchen. Alternativ sind für die Fritten auch verschiedene andere Materialien verwendbar, z.B. Büschel aus Glaswolle, Metallsiebe usw.

Der Begriff Extraktionsmaterial ist für den Zweck dieser Beschreibung so zu verstehen, dass mindestens ein Teil des Innenraums des Extraktionsrohrs 9 zwischen den Fritten 11 in der Art einer Packung mit dem Material gefüllt ist. Als Extraktionsmaterial werden Partikel verwendet, welche als Absorbentien oder als Packungsmaterialien in der Gaschromatographie verwendet werden, z.B. Tenax, Chromosorb, Carbopack, Aktivkohle usw. Alle verwendeten Materialien, organische oder anorganische, haben die gemeinsame Eigenschaft dass an ihrer Oberfläche Moleküle adsorbiert werden und sich somit anreichern können.

Das Extraktionsrohr 9 ist mit einem Heizmantel 13 versehen. Die Heizung ermöglicht die Thermodesorption. Anstelle des Heizmantels kann auch eine Strahlungsheizung oder eine Direktbeheizung des Rohrs mit niedriger Spannung und relativ hoher Stromstärke möglich.

Das typische Vorgehen mit der beschriebenen Vorrichtung ist wie folgt: Die zu analysierende Probe 16 befindet sich in der Regel in einer gasdichten Probenflasche 14. Ein Teil des im Raum 15 über der Probe befindlichen Gases (Head Space) wird mit Hilfe der Spritze durch das Extraktionsmaterial gesaugt, wobei die zu analysierenden Moleküle (Analyt) an der Oberfläche absorbiert werden und sich dort bei mehrfachem Ansaugen einer Gasmenge anreichern. In einem weiteren Schritt werden diese Moleküle einem Analysengerät (z.B. einen Gaschromatographen) zugeführt, indem entweder das Extraktionsrohr beheizt und mit Gas durchströmt wird (Thermodesorption), oder der Analyt wird mit einem Lösungsmittel von den Partikel abgewaschen und mit dem Lösungsmittel dem Analysengerät zuführt (Flüssigdesorption).

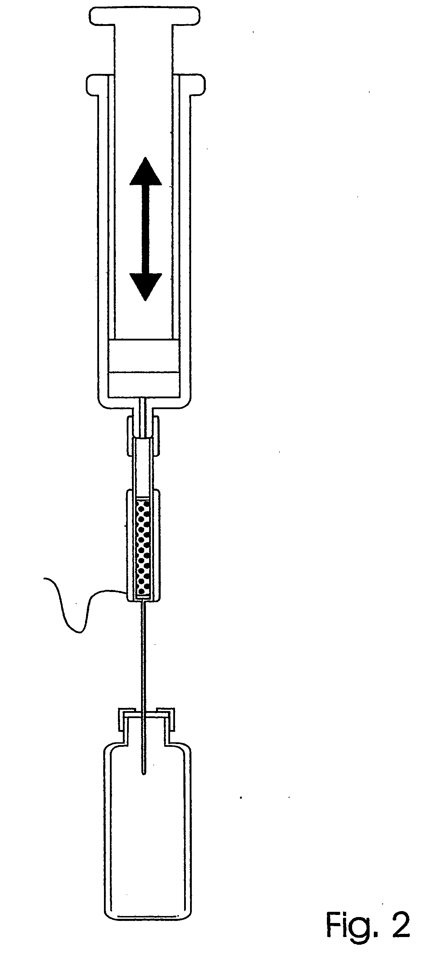

Im einzelnen verläuft das Verfahren, wie in den Figuren 2 - 4 anhand einer flüssigen Probe gezeigt, wie folgt:
Zunächst wird die Probe vorbereitet oder aufgearbeitet, indem die zu analysierenden Moleküle, d.h. der Analyt von der Flüssigkeit getrennt wird. Hierfür gibt es gibt es drei bevorzugte Möglichkeiten:
   Entweder wird, wie in Fig. 2 gezeigt, die Spritzennadel in den Gasraum der Probenflasche eingeführt. Durch wiederholtes Aufziehen und Ausstossen des Gases mit der Spritze werden die zu analysierenden Substanzen mindestens teilweise auf das Extraktionsmaterial übertragen.

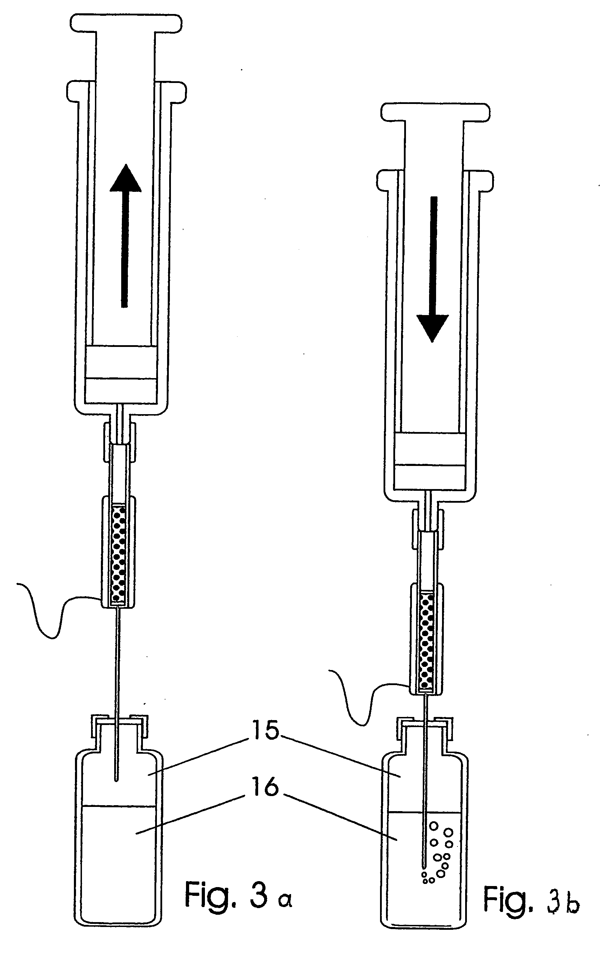

Oder die Spitze der Spritzennadel wird, wie in Fig. 3a und 3b gezeigt, zuerst in den Gasraum 15 der Probenflasche 14 eingeführt und mit der Spritze ein Teil des Gases in die Spritze aufgezogen. Dann wird die Nadelspitze in die Flüssigkeit 16 getaucht und das Gas ausgestossen, wobei flüchtige Moleküle aus der Flüssigkeit in den Gasraum ausgeblasen werden. Danach wird die Nadelspitze wieder in den Gasraum zurückgezogen und wieder ein Teil des Gases durch das Extraktionsmaterial in die Spritze gezogen. Dieser Vorgang kann wiederholt werden um die Effizienz der Extraktion zu erhöhen.

Als dritte Alternative kann die Flüssigkeit direkt durch das Extraktionsmaterial in die Spritze gezogen werden. Auch dieser Vorgang kann wiederholt werden um die Effizienz zu steigern.

Zur Aufbereitung einer festen Probe wird die erste der drei beschriebenen Methoden verwendet.

Zum Vermeiden von Kontamination des Systems durch Umgebungsluft kann die Spritze vor dem Einführen in die Probeflasche zum Teil mit sauberem Gas gefüllt werden.

Zum Überführen der Substanzen in das Analysengerät wird die thermische Desorption oder die Flüssigdesorption verwendet. Die thermische Desorption beruht darauf, dass die an den Partikeln angelagerten Substanzen sich bei erhöhten Temperaturen wieder von den Partikeln lösen und in die Gasphase übergehen. Wird also das Extraktionsmaterial geheizt und mit Gas durchströmt, können die zu analysierenden Substanzen in diesem Gasstrom in das Analysengerät übertragen werden. Bei der Flüssigdesorption werden die Substanzen mit einem Lösungsmittel von den Partikeln gelöst und in das Analysengerät übertragen.

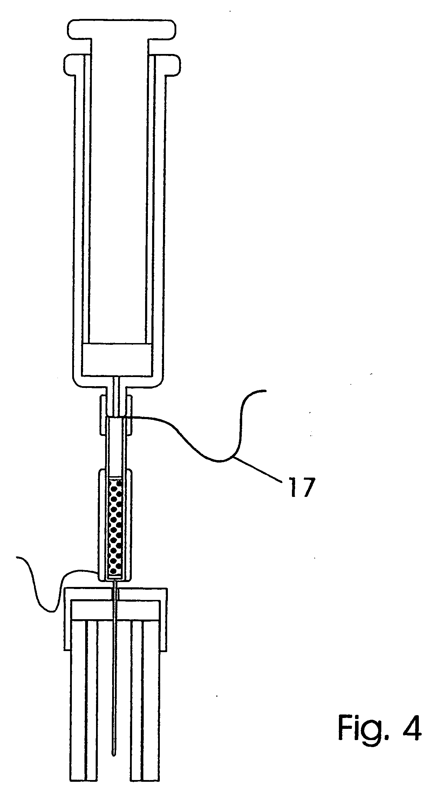

Für die thermische Desorption gibt es wiederum mehrere Möglichkeiten, jeweils mit gleichzeitiger Heizung der Packung. Sie kann entweder, wie in Fig. 4 gezeigt, durch Zuführung eines Reingases über einen zwischen der Spritze und der Packung angeordneten Gaseingang 17 erfolgen. Diese Methode ist die eleganteste, aber auch aufwendigste Art die Substanzen vom Filter in den Gaschromatographen zu bringen. Da während der Einspritzung der Spritzenstempel ganz nach unten gedrückt ist und die seitliche Gaszuleitung nur ein sehr kleines Volumen hat ist die Gefahr des Gasflusses in die falsche Richtung vernachlässigbar. Der Desorptiongasdruck muss geringfügig höher sein als der Gasdruck im Injektor. Bei dieser Methode werden die Substanzen ausserdem schonend in das Analysengerät überführt, weil ausschliesslich sauerstofffreies Gas verwendet werden kann. Die Methode benötigt aber ein zusätzliches Ventil und eine Druckregelung, d.h. einen gewissen apparativen Aufwand.

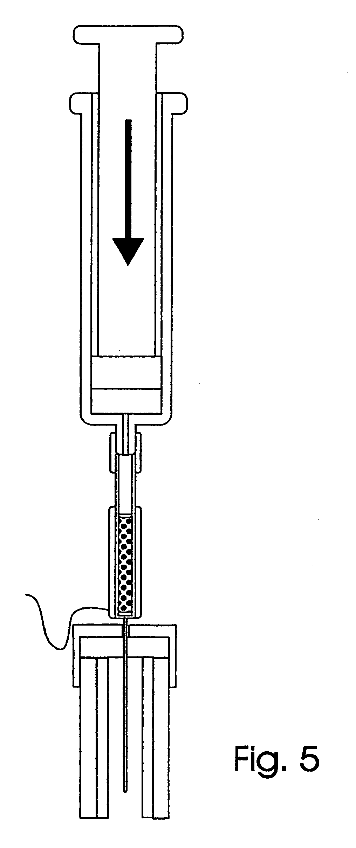

Alternativ kann sie, wie in Fig. 5 gezeigt, mit Gas aus dem Probefläschchen erfolgen. Diese Methode ist technisch am einfachsten da keine zusätzlichen Gasventile oder Geräte notwendig sind. Sie hat aber den Nachteil, dass die zu analysierenden Substanzen während der Desorption höheren Temperaturen und Sauerstoff ausgesetzt sind was zu Oxydationen der Substanzen führen kann. Diese Methode taugt aber zur Analyse von chemisch stabilen Verbindung wie z.B. Kohlenwasserstoffen oder chlorierten Lösungsmitteln.

Schliesslich kann sie auch mit Reinstgas aus einem Gasreservoir erfolgen. Das Gasreservoir ist in der Regel ein mit einem Septum verschlossenes Gefäss welches über eine Gasleitung mit einer Gasflasche verbunden ist. Bei dieser Methode werden die Substanzen ebenfalls schonend in das Gerät überführt, aber es ist ein zusätzliches Gasreservoir notwendig.

Bei allen drei Methoden ist darauf zu achten, dass beim Einstechen der Nadel in den unter Druck stehenden Injektor des Chromatographen Gas rückwärts durch den Filter in die Spritze oder in das Gaszuführungssystem fliesst, da sonst die Gefahr besteht dass die Substanzen in die falsche Richtung desorbiert werden.

Dies würde zu falschen Resultaten und sog. Carry-Over-Effekten, d.h. dem Verschleppen von Substanzen von einer Messung zur nächsten, führen. Dieser Effekt kann generell vermieden werden, indem der Druck im Gaschromatographen während der Einspritzung abgestellt wird. Dies ist auch deshalb zu empfehlen da so die Substanzen in der kleinstmöglichen Gasmenge vom Filter in den Chromatographen transportiert werden können und das Gas, in welchem die Substanzen in den Chromatographen transportiert werden, nicht durch den regulären Gasfluss im Chromatographen verdünnt werden. Je geringer die Desorptionsgasmenge ist, um so schärfer sind die Signale und entsprechend höher die Empfindlichkeit des Gerätes.

## Patentansprüche

1. Verfahren zur Vorbereitung einer mit einer Hohlnadel in eine Spritze aufgezogenen Probe zur Extraktion und Anreicherung einer flüchtigen Komponente aus einer flüssigen, festen oder gasförmigen Probe um anschliessend einem Analysengerät, z.B. einem Gaschromatographen zugeführt zu werden, wobei die Probe zur Extraktion der interessierenden Analyten durch eine Packung aus einer stationären Phase mit einem im Vergleich zum Innenraum der Hohlnadel vergrösserten Volumen gespült wird.

2. Vorrichtung zur Durchführung des Verfahrens nach Anspruch 1, umfassend eine Spritze und eine mit dem Spritzenkörper verbundene Hohlnadel, wobei zwischen der Nadel und dem Spritzenkörper eine gegenüber dem Querschnitt der Nadel erweiterte Kammer vorgesehen ist, in welcher sich ein Extraktionsmaterial befindet.

3. Vorrichtung nach Anspruch 2, **dadurch gekennzeichnet dass** die Kammer mit einer Heizung versehen ist.

## Claims

1. A method for preparing a sample drawn up into a syringe with a hollow needle for extracting and enriching a volatile component from a liquid, solid or gaseous sample for subsequent introduction into an analytical instrument, for example a gas chromatograph, wherein, in order to extract the analyte of interest, the sample is flushed through a packing of a stationary phase having an enlarged volume in comparison with the interior of the hollow needle.

2. A device for carrying out the method according to claim 1, comprising a syringe and a hollow needle connected to the syringe barrel, wherein a chamber of greater cross-section than the needle and accommodating an extraction material is provided between the needle and the syringe barrel.

3. A device according to claim 2, **characterised in that** the chamber is provided with a heater.

## Revendications

1. Procédé pour la préparation d'un échantillon qui est aspiré par une aiguille creuse dans une seringue pour l'extraction et l'enrichissement d'un composant volatil d'un échantillon liquide, solide ou gazeux afin d'être ensuite amené à un dispositif d'analyse, par exemple un chromatographe pour phase gazeuse, où l'échantillon pour l'extraction des analytes intéressants est rincé à travers un chargement d'une phase stationnaire avec un volume agrandi par rapport à l'espace intérieur de l'aiguille creuse.

2. Dispositif pour la réalisation du procédé selon la revendication 1, comprenant une seringue et une aiguille creuse reliée au corps de la seringue, où entre l'aiguille et le corps de la seringue est prévue une chambre élargie par rapport à la coupe transversale de l'aiguille, dans laquelle se situe une matière d'extraction.

3. Dispositif selon la revendication 2, **caractérisé en ce que** la chambre est munie d'un chauffage.
